# EUROPEAN PATENT APPLICATION

(11) **EP 2 469 334 A1**
(43) Date of publication of application: **27.06.2012**
(21) Application number: 10829696.3
(22) Date of filing: 09.11.2010
(51) Int. Cl.: G03B 15/05, G03B 15/02

(54) **STROBE DEVICE AND IMAGE-CAPTURING DEVICE USING SAME**

(30) Priority: 11.11.2009 JP 2009257730
(71) Applicant: Panasonic Corporation, Kadoma-shi Osaka 571-8501 (JP)
(72) Inventor: MURAI, Toshiaki, Osaka-shi, Osaka 540-6207 (JP)
(74) Representative: Vigand, Philippe
(86) International application number: PCT/JP2010/006560
(87) International publication number: WO 2011/058732

(57) **Abstract**

A strobe device includes an electric discharge tube and a reflection member. The reflection member has an inner peripheral surface formed by a curved line in cross section orthogonal to a direction of the axis of the electric discharge tube so that a space therein expands toward an exit opening from an entrance opening, and two lines tangent to the inner peripheral surface at end points of the entrance opening of the reflection member intersect with each other at a point on a rear side of the axis of the electric discharge tube and on a front side of an exterior surface of a glass bulb that forms the electric discharge tube.

## Description

### TECHNICAL FIELD

The present invention relates to a strobe device including an electric discharge tube provided with a reflective coating formed on an exterior surface of a glass bulb, and a reflection member formed into a cylindrical shape having an inner peripheral surface for reflecting light radiated from the electric discharge tube. The invention also relates to an image-capturing device equipped with the strobe device.

### BACKGROUND ART

In a conventional strobe device, a reflector is used to reflect light radiated from an electric discharge tube to a subject of photograph. The reflector needs to be so designed that it has an opening large enough to converge the light radiated radially from the axis of the electric discharge tube in a given area of flash coverage.

The light radiated in the opposite direction of the subject passes through the glass bulb of the electric discharge tube having a different refractive index, and it is then reflected a plurality of times on the surface of the reflector. An amount of the light thus decreases with every passage and reflection. There is an electric discharge tube proposed to this end, in which a reflective coating is formed on an exterior surface of a glass bulb (Patent Literature 1, for example).

There is also disclosed a strobe device including an electric discharge tube having a reflective coating like the one discussed above with an opening formed in the front side (i.e., subject side) for radiating light to the outside, and a reflection member of a cylindrical shape disposed around the opening for reflecting the light radiated from the electric discharge tube on an inner peripheral surface thereof (Patent Literature 2, for example). This structure helps reduce the amount of light radiated in directions outside of the flash coverage while also achieving downsizing of the strobe device. Nevertheless, there is still ample room for improvement in view of irradiation efficiency of the light.

### Citation List

### Patent Literature

PTL 1: Unexamined Japanese Patent Publication No. 1995-72535
PTL 2: International Publication No. 2010/084770

### SUMMARY OF THE INVENTION

The present invention covers a strobe device and an image-capturing device featuring the function of radiating light from an electric discharge tube into a required flash coverage while also improving the efficiency of irradiation.

The strobe device of the present invention includes an electric discharge tube and a reflection member. The electric discharge tube includes a cylindrical glass bulb and a reflective coating formed on an exterior surface of the glass bulb. The reflection member formed into a cylindrical shape has an entrance opening for letting in the light radiated from the electric discharge tube, an exit opening for radiating the light entered from the entrance opening, and an inner peripheral surface for reflecting the light. The reflective coating has an opening at one side of the glass bulb for radiating the light to the outside of the electric discharge tube. The entrance opening of the reflection member has a shape so formed as to correspond with a shape of the opening in the reflective coating, and abuts on the exterior surface of the glass bulb. Here, the one side of the glass bulb where the opening is formed in the reflective coating and the reflection member abuts upon is defined as a front side, and another side opposite the front side is defined as a rear side. The inner peripheral surface of the reflection member is formed by a curved line in cross section orthogonal to the direction of the axis of the electric discharge tube so that a space therein expands toward the exit opening from the entrance opening. The inner peripheral surface of the reflection member is also so shaped that two lines tangent to the inner peripheral surface at end points of the entrance opening of the reflection member intersect with each other at a point on the rear side of the axis of the electric discharge tube and on the front side of the exterior surface of the glass bulb. By virtue of this structure the reflection member can prevent the light radiated from the electric discharge tube from being reflected in directions outside of the flash coverage.

### BRIEF DESCRIPTION OF DRAWINGS

Fig. 1 is a perspective view of a strobe device according to an exemplary embodiment of the present invention.
Fig. 2A is a perspective view of main components of the strobe device shown in Fig. 1.
Fig. 2B is a cross-sectional view of the strobe device shown in Fig. 1.
Fig. 3A is an explanatory drawing of a structure of a reflection member of the strobe device shown in Fig. 1.
Fig. 3B is another explanatory drawing illustrating a function of the reflection member shown in Fig. 3A.
Fig. 3C is an enlarged view of a part of Fig. 3B.
Fig. 4A is an explanatory drawing of a structure of a reflection member of a strobe device representing comparison sample 1.
Fig. 4B is an explanatory drawing illustrating a function of the reflection member shown in Fig. 4A.
Fig. 4C is an enlarged view of a part of Fig. 4B.
Fig. 5A is an explanatory drawing of a structure of a reflection member of a strobe device representing comparison sample 2.
Fig. 5B is an explanatory drawing illustrating a function of the reflection member shown in Fig. 5A.
Fig. 5C is an enlarged drawing of a part of Fig. 5B.
Fig. 6A is a graph showing distribution of luminous intensity of the strobe device shown in Fig. 1.
Fig. 6B is a graph showing distribution of luminous intensity of the strobe device of the comparison sample 1.
Fig. 6C is a graph showing distribution of luminous intensity of the strobe device of the comparison sample 2.
Fig. 7A is a cross-sectional view of a strobe device of sample 2 according to the exemplary embodiment of this invention.
Fig. 7B is a cross-sectional view of a strobe device of comparison sample 3.
Fig. 7C is a cross-sectional view of a strobe device of comparison sample 4.
Fig. 8A is a graph showing distribution of luminous intensity of the strobe device shown in Fig. 7A.
Fig. 8B is a graph showing distribution of luminous intensity of the strobe device of comparison sample 3.
Fig. 8C is a graph showing distribution of luminous intensity of the strobe device of comparison sample 4.
Fig. 9 is a schematic illustration of an image-capturing device according to this exemplary embodiment of the invention.

### DETAILED DESCRIPTION OF THE INVENTION

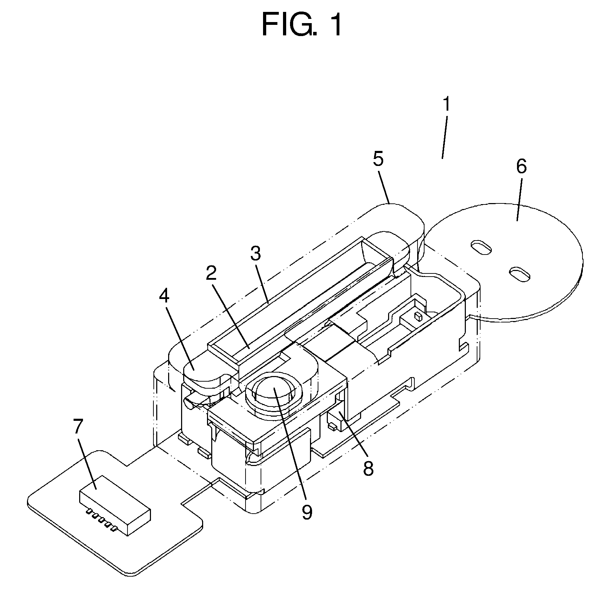

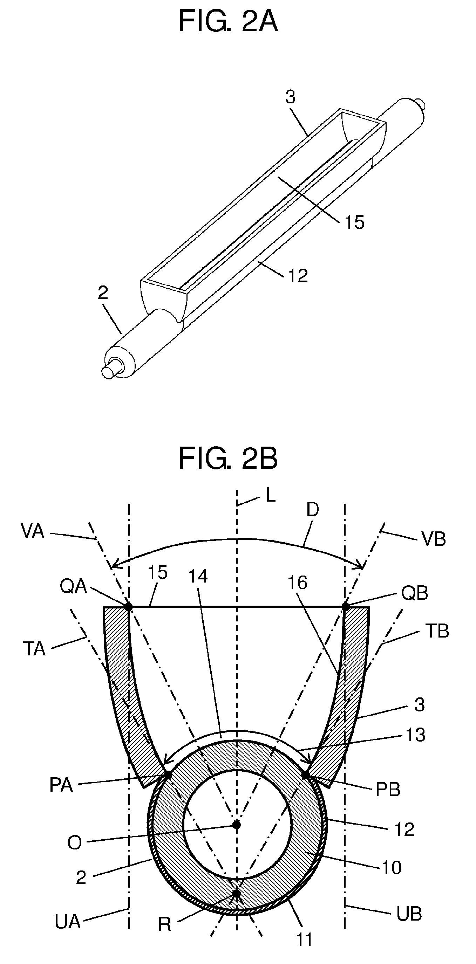

Fig. 1 is a perspective view of a strobe device according to an exemplary embodiment of the present invention. Fig. 2A and Fig. 2B are perspective view and cross-sectional view depicting main components of the strobe device shown in Fig. 1. As shown in Fig. 1, strobe device 1 includes electric discharge tube 2 for radiating light, and reflection member 3 for reflecting the light radiated from electric discharge tube 2 toward a subject of photograph.

Strobe device 1 also has holder 4, optical member 5 and panel substrate 6. Holder 4 retains electric discharge tube 2 and reflection member 3. Optical member 5, a part of which has translucency, houses holder 4 with electric discharge tube 2 and reflection member 3 kept retained. Panel substrate 6 is fixed to optical member 5 in a manner to cover optical member 5. Fig. 1 depicts optical member 5 in fictitious outline in order to show the internal structure.

Strobe device 1 also includes a high-voltage trigger coil (not shown) and various electronic components 7 and 8 mounted on panel substrate 6, and auxiliary light source 9 serving as a supplementary light when using the function of auto-focusing. Auxiliary light source 9 includes a light-emitting diode, for example.

Electric discharge tube (i.e., flash discharge tube) 2 includes elongated cylindrical glass bulb 10 and reflective coating 12 formed by metal deposition on exterior surface 11 of glass bulb 10, as shown in Fig. 2A and Fig. 2B. Glass bulb 10 is also provided with a pair of electrodes for supplying electric power from panel substrate 6 to the inside of glass bulb 10, and the interior space is filled with xenon and the like gases, although not shown in the figures. Xenon gas emits light when excited by a trigger voltage applied to glass bulb 10 while the electrodes are connected to an electrically charged capacitor. Reflective coating 12 is provided with opening 13 at one side of glass bulb 10 for radiating the light to the outside of electric discharge tube 2. More specifically, reflective coating 12 is formed with a metal deposited on an area covering 240° to 270° in circumferential angle of glass bulb 10, and opening 13 of a rectangular strip shape is provided along a direction of the axis of glass bulb 10.

Reflection member 3 includes entrance opening 14 for letting in the light radiated from electric discharge tube 2 and exit opening 15 for radiating the light entered from entrance opening 14. Reflection member 3 is formed in a square cylindrical shape with an inner space penetrating in an L-direction, or an optical axis of the light radiated from electric discharge tube 2 (hereinafter referred to as "optical axis of electric discharge tube 2"), which is orthogonal to the direction of the axis of electric discharge tube 2. Reflection member 3 reflects the light radiated from electric discharge tube 2 on inner peripheral surface (reflecting surface) 16. In other words, reflection member 3 is formed into the cylindrical shape having inner peripheral surface 16 that reflects the light radiated from electric discharge tube 2.

Entrance opening 14 is formed into a rectangular shape corresponding to the shape of opening 13 in reflective coating 12, and so shaped that it fits with exterior surface 11 of glass bulb 10. Reflection member 3 is disposed with entrance opening 14 in contact closely with exterior surface 11 of glass bulb 10 so as to prevent the light of electric discharge tube 2 from leaking between reflection member 3 and glass bulb 10. In addition, the inner edge of entrance opening 14 is positioned in close contact to the inner edge of opening 13 to also prevent the light of the electric discharge tube from leaking between reflective coating 12 and reflection member 3. It is acceptable, however, that entrance opening 14 is to abut simply on exterior surface 11 of glass bulb 10.

Reflection member 3 has a rectangular inner space so formed that it gradually expands from entrance opening 14 toward exit opening 15. Inner peripheral surface 16 of reflection member 3 is designed by the method of free-form curve so as to avoid reflection of the light radiated from electric discharge tube 2 to directions outside of a flash coverage (i.e., the directions that are away from the desired flash coverage). In other words, inner peripheral surface 16 of reflection member 3 is formed by a curved line in cross section orthogonal to the direction in which axis O of electric discharge tube 2 extends, so that the inner space expands toward exit opening 15 from entrance opening 14. This curved line is outwardly convexed. More specifically, inner peripheral surface 16 of reflection member 3 has a curved surface formed of smoothly and continuously connected tiny reflecting surfaces, each of which reflects the incoming light to a predetermined direction irrespective of a difference in incident angle from electric discharge tube 2.

Here, the one side of glass bulb 10 where opening 13 is formed in reflective coating 12 and reflection member 3 abuts upon is defined as a front side, and the other side opposite the front side of electric discharge tube 2 is defined as a rear side. In other words, the front side is the side facing a subject to be irradiated with the light (subject side).

Reflection member 3 placed simply in front of electric discharge tube 2 is not sufficient in order to collect the scattering light radiated forward and to improve the irradiation efficiency. Rather important is the relationship in positions among opening 13 of reflective coating 12, inner peripheral surface 16 of reflection member 3 and the axis O of electric discharge tube 2. Description is provided hereinafter of this important positional relationship.

In the cross section orthogonal to the direction of axis O of electric discharge tube 2, two lines TA and TB that are tangent to inner peripheral surface 16 at end points PA and PB of entrance opening 14 of reflection member 3 intersect with each other at intersection point R, as shown in Fig. 2B. End points PA and PB are the extreme ends at entrance opening 14 of inner peripheral surface 16. Inner peripheral surface 16 of reflection member 3 is so formed as to bring the intersection point R on the rear side of the axis O of electric discharge tube 2 and on the front side of exterior surface 11 of glass bulb 10.

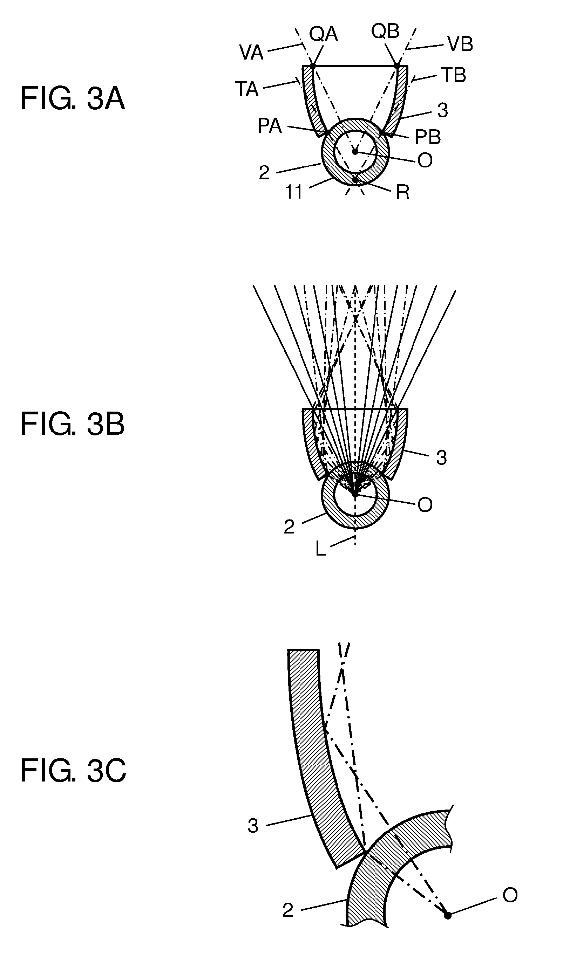

Strobe device 1 constructed as above functions in a manner, which is described hereinafter with reference to Fig. 3A to Fig. 3C. Fig. 3A is an explanatory drawing of a structure of reflection member 3 of strobe device 1. Fig. 3B is another explanatory drawing illustrating the function of reflection member 3, and Fig. 3C is an enlarged view of a part of Fig. 3B.

Out of the light radiated from electric discharge tube 2, a part of it radiated in the direction within a range of radiating angle D travels directly to the subject of photograph without being reflected on reflection member 3, as shown in Fig. 2B (this light is referred to as "direct light"). Radiating angle D is an angle formed between two straight lines that connect the axis O of electric discharge tube 2 and respective end points QA and QB at exit opening 15 of inner peripheral surface 16 of reflection member 3.

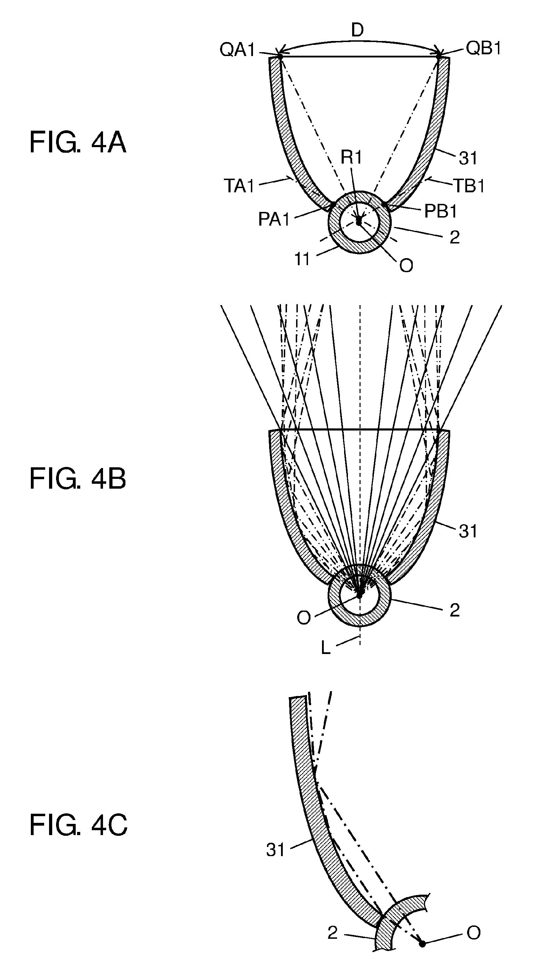

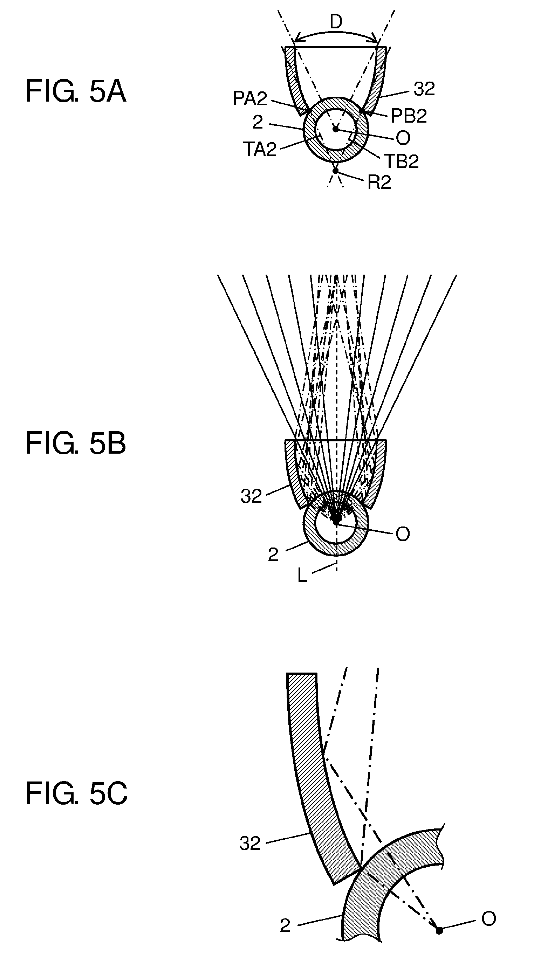

Other part of the light radiated in the direction outside of the range of radiating angle D from electric discharge tube 2 is reflected on inner peripheral surface 16 of reflection member 3, and the radiating direction is changed toward the range of radiating angle D, so that it travels to the subject of photograph in a manner to supplement an amount of the light (this light is referred to as "supplemental light"). In Fig. 3B and Fig. 3C, the direct light and the supplemental light are illustrated with a solid line and an alternate long and short dash line respectively. The same method of illustration also applies to Fig. 4B, Fig. 4C, Fig. 5B, Fig. 5C, etc. as will be described below.

As has been descussed, two tangential lines TA and TB at end points PA and PB in the cross section orthogonal to the direction of axis O of electric discharge tube 2 intersect at the point on the rear side of the axis O of electric discharge tube 2 and on the front side of exterior surface 11 of glass bulb 10. For this reason, the supplemental light incident upon end points PA and PB of reflection member 3 at entrance opening 14 of inner peripheral surface 16 from the axis O of electric discharge tube 2 is reflected in the direction nearly parallel with optical axis L of electric discharge tube 2, and irradiates the center area in the flash coverage, as shown in Fig. 3B and Fig. 3C. It can hence increase an amount of exposure in the center area within the flash coverage, and improve the irradiation efficiency.

In addition, it is desirable that inner peripheral surface 16 of reflection member 3 is so formed that two lines UA and UB tangent to inner peripheral surface 16 at end points QA and QB of exit opening 15 are generally parallel with optical axis L of electric discharge tube 2 in the cross section orthogonal to the direction of axis O of electric discharge tube 2. By virtue of this structure, the supplemental light incident upon end point QA of reflection member 3 at exit opening 15 of inner peripheral surface 16 from the axis O of electric discharge tube 2 is reflected in a direction generally parallel with line VB connecting between the axis O of electric discharge tube 2 and the other end point QB of exit opening 15, and irradiates inside the flash coverage.

As stated above, inner peripheral surface 16 is formed in a manner that the inner space expands gradually from entrance opening 14 toward exit opening 15. For this reason, an angle at which the supplemental light intersects with optical axis L of electric discharge tube 2 increases with a distance of the position of incidence of the light from the axis O of electric discharge tube 2 toward exit opening 15 from entrance opening 14. However, this does not cause the light to radiate outside of the flash coverage.

In this way, the light incident upon inner peripheral surface 16 adjacent to exit opening 15 of reflection member 3 from the axis O of electric discharge tube 2 is reflected in the direction generally parallel to a line that crosses the optical axis of the light radiated from electric discharge tube 2 at half the radiating angle D. That is, the light is reflected in the directions generally parallel to the lines that connect the axis O of electric discharge tube 2 and respective end points QA and QB at exit opening 15 of inner peripheral surface 16 of reflection member 3. The structure can thus prevent the light radiated from electric discharge tube 2 from being reflected to the directions outside of the flash coverage.

Description is provided next of the effect of this embodiment by using a concrete example. In the following embodiment, glass bulb 10 is 1.30mm in outer diameter and 0.85mm in inner diameter. Reflective coating 12 is provided over a range extending 250° in the cross section orthogonal to the direction of the axis O of electric discharge tube 2. In other words, opening 13 is set to an angle of 110°.

### EMBODIED SAMPLE 1

In embodied sample 1, exit opening 15 is so set that it has radiating angle D of 54°. More specifically, exit opening 15 is set so that each of the lines VA and VB that connect the axis O of electric discharge tube 2 and respective one of end points QA and QB at exit opening 15 intersects with optical axis L of electric discharge tube 2 at half the radiating angle D (i.e., angle of 27°). In addition, tangential lines TA and TB at end points PA and PB in the cross section orthogonal to the direction of the axis O of electric discharge tube 2 intersect with each other at a point on the rear side of the axis O of electric discharge tube 2 and on the front side of exterior surface 11 of glass bulb 10, as shown in Fig. 2B and Fig. 3A. Furthermore, inner peripheral surface 16 of reflection member 3 is so formed that two lines UA and UB tangent to inner peripheral surface 16 at end points QA and QB of exit opening 15 become generally parallel with the optical axis L of electric discharge tube 2.

### COMPARISON SAMPLE 1

Description is provided next of a strobe device of comparison sample 1 with reference to Fig. 4A. Fig. 4A is an explanatory drawing of a structure of reflection member 31 of the strobe device of comparison sample 1, of which radiating angle D is set to 54°, the same angle as embodied sample 1. However, intersection R1 between tangential lines TA1 and TB1 at end points PA1 and PB1 1 of the entrance opening lies in the front side of the axis O of electric discharge tube 2.

### COMPARISON SAMPLE 2

Referring to Fig. 5A, description is provided next of a strobe device of comparison sample 2. Fig. 5A is an explanatory drawing of a structure of reflection member 32 of the strobe device of comparison sample 2, of which radiating angle D is set to 54°, the same angle as embodied sample 1. However, intersection R2 between tangential lines TA2 and TB2 at end points PA2 and PB2 of the entrance opening lies in the rear side of exterior surface 11 of glass bulb 10 of electric discharge tube 2.

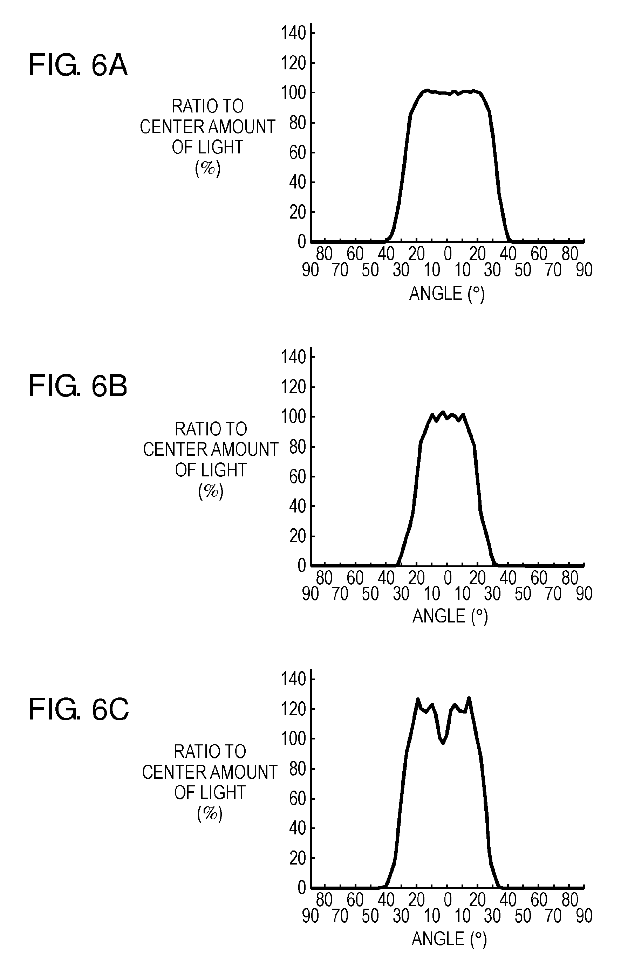

Description is provided next of exposing characteristics of the embodied sample 1, comparison sample 1 and comparison sample 2 with reference to Fig. 3B, Fig. 3C, Fig. 4B, Fig. 4C, Fig. 5B, Fig. 5C and Fig. 6A to Fig. 6C. Fig. 4B is an explanatory drawing illustrating a function of the reflection member shown in Fig. 4A, and Fig. 4C is an enlarged view of a part of Fig. 4B. Fig. 5B is an explanatory drawing illustrating a function of the reflection member shown in Fig. 5A, and Fig. 5C is an enlarged drawing of a part of Fig. 5B. Fig. 6A to Fig. 6C are graphs showing distributions of luminous intensity of the strobe devices of embodied sample 1, comparison sample 1 and comparison sample 2 respectively.

In embodied sample 1, the supplemental light incident upon end points PA and PB from the axis O of electric discharge tube 2 is reflected in the directions generally parallel with optical axis L of electric discharge tube 2, and irradiates the center area in the flash coverage, as shown in Fig. 3B and Fig. 3C. It can therefore increase an amount of exposure in the center area within the flash coverage, and improve the irradiation efficiency.

In addition, the light incident upon the inner peripheral surface at the exit opening side of reflection member 3 from the axis O of electric discharge tube 2 is reflected in the direction generally parallel with the lines connecting between the axis O of electric discharge tube 2 and the respective end points QA and QB. It is by virtue of this structure that can prevent the light radiated by electric discharge tube 2 from being reflected to directions outside of the flash coverage.

As a result, the strobe device of embodied sample 1 provides approximately 80% in the amount of exposure at a fringe portion of the flash coverage as compared to 100% in the center of the irradiation range, as shown in Fig. 6A. Here, the fringe portion of the flash coverage means the area of ±27° from the center at optical axis L of electric discharge tube 2. Since a decrease in the amount of exposure is curtailed to about 20% as stated above, it becomes possible as strobe device 1 to achieve a generally uniform distribution of the luminous intensity.

In the case of comparison sample 1, it is necessary to form the inner peripheral surface of a large curvature in order for the supplemental light incident upon the inner peripheral surface at end points PA1 and PB1 of the entrance opening in reflection member 31 from the axis O of electric discharge tube 2 to be reflected in the direction generally parallel to optical axis L of electric discharge tube 2. It is also necessary to form the curvature of the inner peripheral surface large for the purpose of making the supplemental light incident upon the inner peripheral surface at end points QA1 and QB1 of the exit opening in reflection member 31 from the axis O of electric discharge tube 2 become the light to irradiate inside the flash coverage. Reflection member 31 of comparison sample 1 thus needs to be made larger in size.

There is additional concern about formation of fine wrinkles (unevenness) on inner peripheral surface 16 when fabricating reflection member 31 with press working of a metal material if the inner peripheral surface needs to be a curved surface of large curvature like that of reflection member 31. Such wrinkles diffuse the light.

In addition, the supplemental light incident upon the inner peripheral surface in the vicinity of the entrance opening and the middle area between the entrance opening and the exit opening of reflection member 31 from the axis O of electric discharge tube 2 has large incidence angles, as shown in Fig. 4B and Fig. 4C. Such supplemental light therefore becomes incident again on inner peripheral surface 16. Although the light eventually irradiates into the flash coverage, it loses the amount of intensity as a result of being reflected a plurality of times. The amount of light decreases to about 95% after one reflection, for example. The supplemental light incident upon inner peripheral surface 16 in the vicinity of exit opening 15 of reflection member 3 from the axis O of electric discharge tube 2 irradiates the center area in the flash coverage.

Accordingly, distribution of the light from the strobe device of comparison sample 1 is such that a large amount of the light is in parallel with optical axis L. As a result, the light is concentrated only in the center area within the flash coverage, whereas an amount of the supplemental light is not sufficient in the area outside of the flash coverage, as shown in Fig. 6B, thereby causing uneven distribution in the luminous intensity.

In the case of comparison sample 2, on the other hand, inner peripheral surface of reflection member 32 has a curved line that becomes narrow toward optical axis L of electric discharge tube 2 in the vicinity of the entrance opening. As a result, the supplemental light incident upon the inner peripheral surface in the vicinity of the entrance opening of reflection member 32 from the axis O of electric discharge tube 2 has incidence angles much smaller than necessary, as shown in Fig. 5B and Fig. 5C. This reduces an amount of the light reflected to the direction generally in parallel to optical axis L of electric discharge tube 2, and it therefore decrease a total amount of the light that irradiates the center area in the flash coverage.

In addition, the supplemental light incident upon the inner peripheral surface in the vicinity of the exit opening of reflection member 32 from the axis O of electric discharge tube 2 has an incidence angle that becomes larger with respect to optical axis L as it gets closer to the exit opening. For this reason, the light is reflected in a direction that crosses optical axis L, and it does not contribute to the light for irradiating the center area in the flash coverage. As a result, distribution of the supplemental light from the strobe device of comparison sample 2 shows a substantial deficiency in the amount of light in the center area due to the lack of supplemental light toward the center area in the flash coverage as shown in Fig. 6C, thereby causing uneven distribution in the luminous intensity.

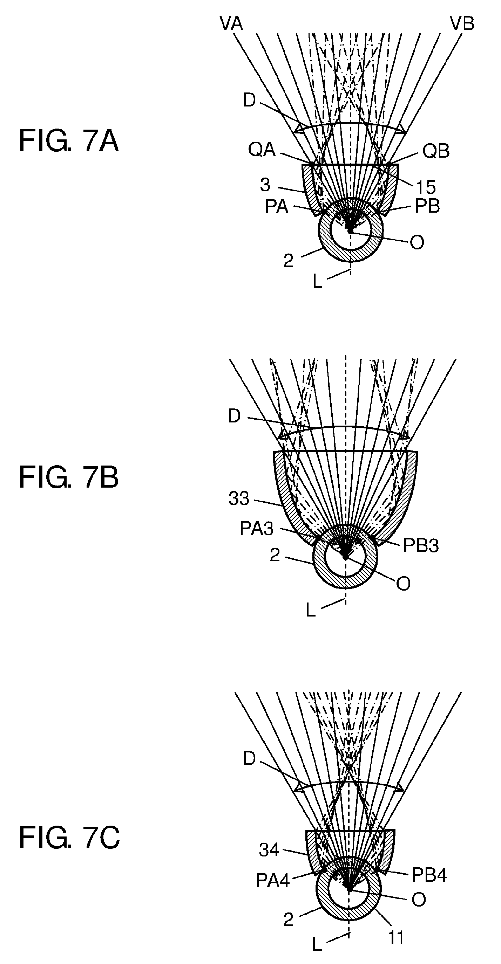

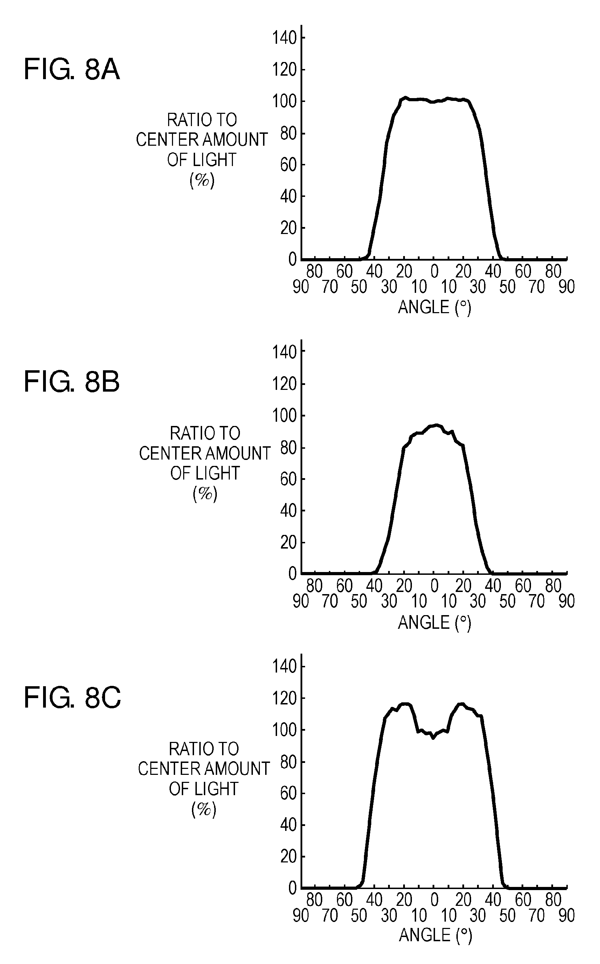

Description is provided next of embodied sample 2 and comparison samples 3 and 4, of which radiating angle D is different from that of embodied sample 1, comparison samples 1 and 2. Fig. 7A to Fig. 7C are cross-sectional views of parts of strobe devices of embodied sample 2, comparison samples 3 and 4 respectively. Fig. 8A to Fig. 8C are graphs showing distributions of luminous intensity of the strobe devices of embodied sample 2, comparison sample 3 and comparison sample 4 respectively.

### EMBODIED SAMPLE 2

In embodied sample 2, exit opening 15 of reflection member 3 is so set that it has radiating angle D of 60° as shown in Fig. 7A. Specifically, exit opening 15 is set so that each of the lines VA and VB that connect the axis O of electric discharge tube 2 and respective one of end points QA and QB at exit opening 15 intersects with optical axis L of electric discharge tube 2 at half the radiating angle D (i.e., angle of 30°).

In addition, an inner peripheral surface of reflection member 3 is so formed that two tangential lines at end points PA and PB of the entrance opening, in the cross section orthogonal to the direction of the axis O of electric discharge tube 2, intersect with each other at a point on the rear side of the axis O of electric discharge tube 2 and on the front side of exterior surface 11 of glass bulb 10.

### COMPARISON SAMPLE 3

Comparison sample 3 is equipped with reflection member 33 so formed that it has same radiating angle D of 60°, as shown in Fig. 7B, and two lines tangent to the inner peripheral surface at end points PA3 and PB3 of the entrance opening intersect with each other at a point on the front side of axis O of electric discharge tube 2.

### COMPARISON SAMPLE 4

Comparison sample 4 uses reflection member 34 so formed that it has same radiating angle D of 60°, as shown in Fig. 7C, and two lines tangent to the inner peripheral surface at end points PA4 and PB4 of the entrance opening intersect with each other at a point on the rear side of axis O of electric discharge tube 2.

As shown in Fig. 8A, embodied sample 2 of different radiating angle D, or a wide angle, also achieves generally a uniform distribution in the luminous intensity like that of embodied sample 1. On the other hand, comparison sample 3 and comparison sample 4 exhibit uneven distributions of the luminous intensity as shown in Fig. 8B and Fig. 8C.

As has been described by referring to embodied samples 1 and 2, it becomes possible to prevent the light radiated from the axis O of electric discharge tube 2 from irradiating toward the outside of the flash coverage by virtue of setting inner peripheral surface 16 of reflection member 3 into one of the configurations as previously illustrated. Since the above configurations realize downsizing in the design of reflection member 3, they can achieve strobe device 1 of small size and high efficiency.

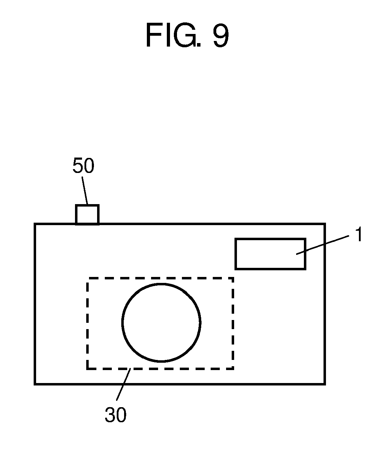

Next, description is provided briefly of an image-capturing device equipped with above strobe device 1 by referring to Fig. 9. Fig. 9 is a schematic illustration of the image-capturing device according to this embodiment. The image-capturing device includes strobe device 1 discussed above, image pickup unit 30 and controller unit 50. Controller unit 50 controls operation of image pickup unit 30 and makes strobe device 1 radiate light in synchronization with an exposure sequence of image pickup unit 30. Image pickup unit 30 can be any such device that exposes a silver film to capture an image, or that stores a digital image by using an image pickup element such as CCD. Controller unit 50 includes a component part generally called a shutter button. Strobe device 1 applied to the image-capturing device in this manner can pick up an image with a uniform distribution of luminous intensity.

It should be understood that the embodiments described above are not meant to restrict the image-capturing device of the present invention, and that various alterations and modifications can be made within the scope of the present invention and without departing from the spirit thereof.

In the structure of Fig. 2B, what has been described is the case wherein inner peripheral surface 16 of reflection member 3 is so formed that tangential line UA at end point QA and another tangential line UB at end point QB of exit opening 15 are generally parallel with optical axis L of electric discharge tube 2 in the cross section orthogonal to the direction of the axis O of electric discharge tube 2. However, inner peripheral surface 16 may have a different shape such that tangential lines UA and UB intersect with each other at a point on the rear side of electric discharge tube 2, rather than being limited to this structure. In other words, inner peripheral surface 16 of reflection member 3 may have any shape so long as it does not cause tangential lines UA and UB at end points QA and QB of exit opening 15 to intersect with each other on the front side of electric discharge tube 2, in the cross section orthogonal to the direction of the axis of electric discharge tube 2.

As discussed above, strobe device 1 according to this exemplary embodiment includes electric discharge tube 2 and reflection member 3. In reflection member 3 of the cylindrical shape, entrance opening 14 is formed into a shape corresponding to that of opening 13 of reflective coating 12 and fitting with exterior surface 11 of glass bulb 10. In addition, reflection member 3 can avoid reflection of the light radiated from electric discharge tube 2 in the directions outside of the flash coverage since inner peripheral surface 16 is designed by the method of free-form curve.

Moreover, inner peripheral surface 16 of reflection member 3 is so formed that tangential lines TA and TB at end points PA and PB of entrance opening 14 intersect with each other at the point on the rear side of the axis O of electric discharge tube 2 and on the front side of exterior surface 11 of glass bulb 10 in the cross section orthogonal to the direction of the axis O of electric discharge tube 2. The light from axis O of electric discharge tube 2 is thus reflected on inner peripheral surface 16 in the vicinity of entrance opening 14 of reflection member 3 into the direction generally parallel with the optical axis L of electric discharge tube 2. It can therefore improve the irradiation efficiency for this reason. It can also achieve downsizing of strobe device 1 since it makes possible inner peripheral surface 16 to be a small curvature, and entrance opening 14 and exit opening 15 to be narrow in widths.

### INDUSTRIAL APPLICABILITY

A strobe device and an image-capturing device according to the present invention are capable of radiating light from an electric discharge tube within a required flash coverage while also improving the efficiency of irradiation. The invention is therefore useful for a strobe device and an image-capturing device equipped with the strobe device that includes an electric discharge tube provided with a reflective coating formed on an exterior surface of a glass bulb, and a reflection member formed into a cylindrical shape having an inner peripheral surface for reflecting the light radiated from the electric discharge tube.

### REFERENCE MARKS IN THE DRAWINGS

- 1: Strobe device
- 2: Electric discharge tube
- 3, 31, 32, 33, 34: Reflection member
- 4: Holder
- 5: Optical member
- 6: Panel substrate
- 7, 8: Electronic component
- 9: Auxiliary light source
- 10: Glass bulb
- 11: Exterior surface
- 12: Reflective coating
- 13: Opening
- 14: Entrance opening
- 15: Exit opening
- 16: Inner peripheral surface
- 30: Image pickup unit
- 50: Controller unit

## Claims

1. A strobe device comprising:
an electric discharge tube having a cylindrical glass bulb and a reflective coating formed on an exterior surface of the glass bulb; and
a reflection member formed into a cylindrical shape having an entrance opening for letting in light radiated from the electric discharge tube, an exit opening for radiating the light entered from the entrance opening, and an inner peripheral surface for reflecting the light, wherein
the reflective coating has an opening at one side of the glass bulb for radiating the light to the outside of the electric discharge tube,
the entrance opening of the reflection member has a shape formed to correspond with a shape of the opening in the reflective coating, and abuts on the exterior surface of the glass bulb, and
the inner peripheral surface of the reflection member is formed by a curved line in cross section orthogonal to a direction of the axis of the electric discharge tube so that a space therein expands toward the exit opening from the entrance opening, and two lines tangent to the inner peripheral surface at end points of the entrance opening of the reflection member intersect with each other at a point on a rear side of the axis of the electric discharge tube and on a front side of the exterior surface of the glass bulb, wherein the front side is defined as one side of the glass bulb where the opening is formed in the reflective coating and the reflection member abuts upon, and the rear side is defined as another side of the electric discharge tube opposite the front side.

2. The strobe device of claim 1, wherein the inner peripheral surface of the reflection member is so formed that two lines tangent to the inner peripheral surface at end points of the exit opening of the reflection member are substantially parallel with an optical axis of the light radiated from the electric discharge tube, in the cross section orthogonal to the direction of the axis of the electric discharge tube.

3. An image-capturing device comprising:
the strobe device of claim 1;
an image pickup unit; and
a controller unit for operating the image pickup unit and making the strobe device radiate light in synchronization with an exposure sequence of the image pickup unit.
